# EUROPÄISCHE PATENTSCHRIFT

(11) **EP 3 692 708 B1**
(45) Veröffentlichungstag und Bekanntmachung des Hinweises auf die Patenterteilung: **09.08.2023**
(21) Anmeldenummer: 18782974.2
(22) Anmeldetag: 04.10.2018
(51) Int. Cl.: H04N 23/51, H04N 23/698, H04N 23/90, H04N 23/50

(54) **PANORAMAKAMERA ZUR VIDEOAUFNAHME VON SPIELFELDERN SOWIE EIN VERFAHREN ZUM BETRIEB DIESER PANORAMAKAMERA**
PANORAMIC CAMERA FOR VIDEO-RECORDING PLAYING FIELDS AND A METHOD FOR OPERATING SAID PANORAMIC CAMERA
CAMÉRA PANORAMIQUE POUR L'ENREGISTREMENT VIDÉO DE TERRAINS DE JEUX AINSI QUE PROCÉDÉ POUR FAIRE FONCTIONNER CETTE CAMÉRA PANORAMIQUE

(30) Priorität: 06.10.2017 DE 102017123261
(43) Veröffentlichungstag der Anmeldung: 12.08.2020
(73) Patentinhaber: AISports Watch GmbH, 45356 Essen (DE)
(72) Erfinder: MOSER, Georg, 45147 Essen (DE); OVERHOFF, Jonathan, 45133 Essen (DE); HOLAREK, Bernd, 45147 Essen (DE); BAUDEWIG, Marvin, 47058 Duisburg (DE); BODENSTEIN, Christian, 50823 Köln (DE)
(74) Vertreter: Andrejewski - Honke Patent- und Rechtsanwälte Partnerschaft mbB
(86) Internationale Anmeldenummer: PCT/EP2018/077061
(87) Internationale Veröffentlichungsnummer: WO 2019/068836

(56) Entgegenhaltungen:
- EP-A1- 2 860 957
- WO-A1-2016/032547
- US-A1- 2013 100 292
- US-A1- 2016 037 026
- US-A1- 2017 155 888

## Beschreibung

Die Erfindung betrifft eine Panoramakamera zur Videoaufnahme von Spielfeldern, insbesondere von Fußballplätzen, umfassend ein Gehäuse, ein Anordnungsmittel zur Anordnung der Panoramakamera in einer bestimmten Höhe, wenigstens eine Recheneinheit, wenigstens einen Halter für die Halterung einer oder mehrerer Digitalkameras sowie eine Mehrzahl an Digitalkameras. Die Erfindung betrifft ferner ein Verfahren zum Betrieb der Panoramakamera.

In Dokument US 2017/155888 wird eine Panoramakamera zur Aufzeichnung von Sportereignissen beschrieben. In Dokument US 2013/100292 wird ein Gehäuse gezeigt, welches mehrere Kameras umschließt. In Dokument WO 2016/032547 wird ein Halter für eine Überwachungskamera gezeigt. In WO 2011/127434 A2 ist eine Panoramakamera beschrieben, welche eine

Mehrzahl an Digitalkameras offenbart, welche alle in einem gemeinsamen Gehäuse untergebracht sind, so dass in einer horizontalen Ebene ein Panoramabildwinkel von rund 180° erreicht wird. Der Panoramabildwinkel dient beispielsweise der Erfassung eines Basketballspiels, wobei die Panoramakamera auf dem Schiedsrichtertisch an der Seitenlinie angeordnet ist. Nachteilig ist allerdings, dass diese Panoramakamera die Spieler hinsichtlich der Größe sehr unterschiedlich darstellt. So sind die Spieler in der Nähe der Panoramakamera viel zu groß abgebildet, wohingegen die Spieler an der gegenüberliegenden Seitenlinie zu klein visualisiert sind.

Der Erfindung liegt daher die technische Aufgabe zugrunde, eine Panoramakamera anzugeben, welche den vorstehend genannten Nachteil löst. Der Erfindung liegt insbesondere die Aufgabe zugrunde, eine Panoramakamera anzugeben, welche die Größenunterschiede der Spielerdarstellung relativiert. Zur Lösung der technischen Aufgabe lehrt die Erfindung eine Panoramakamera zur Videoaufnahme von Spielfeldern, insbesondere von Fußballplätzen, wie in Anspruch 1 definiert.

Die Begriffe "transversal", "Transversalebene", "sagittal" sowie "Sagittalebene" orientieren sich bevorzugt an der Blickrichtung bzw. an dem Blickfeld der Panoramakamera. Dabei ist bevorzugt, dass - in einem montierten Zustand der Panoramakamera mit Blick auf das Spielfeld - die Transversalebene horizontal ausgerichtet ist und damit parallel zur Erdoberfläche angeordnet ist. Würde die Panoramakamera dann beispielsweise um 90° gedreht, so stünden ihre Transversalebenen senkrecht auf der bzw. auf einer Horizontalebene. Es ist bevorzugt, dass eine bzw. die Sagittalebene senkrecht auf der bzw. einer Transversalebene steht und damit im montierten Zustand der Panoramakamera vorzugsweise senkrecht zu einer Horizontalebene ausgerichtet ist. Zugleich ist bevorzugt, dass die Sagittalebene das Blickfeld der Panoramakamera in einem montierten Zustand der Panoramakamera in eine linke und in eine rechte Hälfte teilt.

Vorzugsweise beträgt der transversale Panoramabildwinkel α wenigstens 140°, weiter vorzugsweise wenigstens 150°, besonders vorzugsweise wenigstens 160° und ganz besonders vorzugsweise wenigstens 170°. Der transversale Panoramabildwinkel α beläuft sich bevorzugt auf höchstens 350°, weiter bevorzugt auf höchstens 270° bzw. 250° bzw. 230° bzw. 210°. Der sagittale Panoramabildwinkel β beträgt vorteilhafterweise wenigstens 60°, weiter vorteilhafterweise wenigstens 70° und besonders vorteilhafterweise wenigstens 80°. Zweckmäßigerweise beträgt der sagittale Panoramabildwinkel höchstens 180°, vorzugsweise 160°, weiter vorzugsweise 140°, bzw. 120° bzw. 110° bzw. 100°.

Die Digitalkameras umfassen vorzugsweise eine Platine und/oder einen Bildsensor und/oder ein Objektiv. Der Bildsensor weist beispielsweise eine CMOS- oder eine CCD-Pixelmatrix auf.

Der Erfindung liegt die Erkenntnis zugrunde, dass Digitalkameras typischerweise sagittale Bildwinkel von 40° bis 50° aufweisen. Diese sagittalen Bildwinkel reichen völlig aus für die in WO 2011/127434 A2 beschriebene Kameraposition auf dem Schiedsrichtertisch bzw. auf einem Stativ. Allerdings wurde gefunden, dass die in WO 2011/127434 A2 beschriebene Kameraposition ursächlich ist für den Nachteil der ungleichen Spielerdarstellungen in Abhängigkeit von der Entfernung zur Seitenlinie. Es hat sich herausgestellt, dass es von großem Vorteil ist, dass die Panoramakamera in einigen Metern Höhe, beispielsweise in 8 bis 9 m Höhe, angeordnet wird. Ferner wurde gefunden, dass eine Befestigung der Panoramakamera in dieser Höhe vor allem an immobilen Bauten, beispielsweise an Flutlichtmasten oder Stadiondächern wirtschaftlich ist. Die entsprechende Errichtung eines Mastes mit der bloßen Funktion des Tragens der Panoramakamera treibt die Kosten für dieselbe unverhältnismäßig in die Höhe, weswegen die Befestigung der Panoramakamera an immobilen Bauten zu bevorzugen ist. Derartige immobile Bauten jedoch befinden sich überwiegend unmittelbar an der Seitenlinie, was dazu führt, dass der sagittale Panoramabildwinkel von 40 bis 50° nicht mehr ausreichend ist. Aus diesem Grunde beträgt der erfindungsgemäße sagittale Panoramabildwinkel β wenigstens 60°. Hierdurch kann die Panoramakamera in einer entsprechenden Höhe befestigt werden, so dass die Spieler in vernünftigen Verhältnissen zueinander abgebildet werden, so dass die eingangs beschriebene technische Aufgabe gelöst wird.

Es ist besonders bevorzugt, dass die Mehrzahl an Digitalkameras wenigstens drei Lateralkameras umfasst, wobei die Lateralkameras in einem montierten Zustand der Panoramakamera so ausgerichtet sind, dass ihre entsprechenden Bildfelder seitwärts nacheinander folgen. Es ist besonders bevorzugt, dass die Lateralkameras jeweils ein verzeichnungsfreies bzw. verzerrungsfreies Objektiv aufweisen. Der Begriff "verzerrungsfrei" meint insbesondere, dass das Objektiv keinen geometrischen Abbildungsfehler erzeugt, welcher zu einer lokalen Veränderung des Abbildungsmaßstabes führt. Vorzugsweise ist das Objektiv der Lateralkamera bzw. sind die Objektive der Lateralkameras dergestalt verzeichnungsfrei, dass weder eine kissenförmige Verzeichnung noch eine tonnenförmige Verzeichnung eines Rechteckes eintritt. Der Begriff "verzeichnungsfrei" bzw. "verzerrungsfrei" meint bevorzugt, dass eine gerade Linie eines Motives an einem Bildrand entlang des gesamten Bildrandes weniger als 5 %, vorzugsweise weniger als 4 %, weiter vorzugsweise weniger als 2 % und besonders vorzugsweise weniger als 1 % von einer Geraden abweicht. Dabei wird die absolut ermittelte Abweichung in ein Verhältnis gesetzt zu der Länge des entsprechenden Bildrandes in dessen Richtung die Abweichung stattfindet. Es ist bevorzugt, dass wenigstens zwei, weiter vorzugsweise wenigstens drei und besonders vorzugsweise wenigstens vier und ganz besonders vorzugsweise fünf Lateralkameras vorliegen. Die Lateralkameras weisen vorteilhafterweise in der Transversalebene und/oder in der Sagittalebene einen Bildwinkel von jeweils wenigstens 20°, 30°, 35° bzw. 40° und vorzugsweise höchstens einen Bildwinkel von 80°, 70°, 60° bzw. 50° auf. Die Brennweite der Objektive der Lateralkameras beträgt vorzugsweise wenigstens 3 mm, weiter vorzugsweise wenigstens 3,5 mm und besonders vorzugsweise wenigstens 4 mm. Die Brennweite der Objektive der Lateralkameras beläuft sich höchstens auf 1200 mm, vorzugsweise auf höchstens 400 mm und weiter vorzugsweise auf höchstens 100 mm bzw. 50 mm bzw. 20 mm bzw. 10 mm.

Es ist sehr bevorzugt, dass die Mehrzahl an Digitalkameras wenigstens eine Longitudinalkamera umfasst, wobei die Longitudinalkamera so ausgerichtet ist, dass ihr entsprechendes Bildfeld in einem montierten Zustand der Panoramakamera im Vergleich zu den übrigen der Mehrzahl an Digitalkameras am weitesten nach unten gerichtet ist. Der Ausdruck "übrige der Mehrzahl an Digitalkameras" meint insbesondere die Lateralkameras. Vorzugsweise ist die wenigstens eine Longitudinalkamera so ausgerichtet, dass ihr entsprechendes Einzelbild an eines oder an mehrere der Einzelbilder der Lateralkameras überlappend anschließt. Vorteilhafterweise überlappt das Einzelbild der wenigstens einen Longitudinalkamera wenigstens mit dem Einzelbild einer mittleren Lateralkamera bzw. mit den Einzelbildern der beiden mittleren Lateralkameras. Vorzugsweise überlappt das Einzelbild der wenigstens einen Longitudinalkamera auch mit den beiden sich seitlich an die mittlere bzw. mittleren Lateralkameras anschließenden Lateralkameras und besonders vorzugsweise mit allen Lateralkameras. Gemäß einer ersten, bevorzugten Ausführungsform weist die Panoramakamera lediglich eine Longitudinalkamera auf. Die lediglich eine Longitudinalkamera umfasst bevorzugt ein Objektiv, vorzugsweise ein Weitwinkelobjektiv und besonders vorzugsweise ein Fischaugenobjektiv. Es ist möglich, dass die Panoramakamera zwei oder mehr Longitudinalkameras aufweist, wobei die zwei oder mehr Longitudinalkameras vorzugsweise weder ein Weitwinkel- bzw. ein Fischaugenobjektiv aufweisen und stattdessen bevorzugt ein Normalobjektiv, insbesondere ein Objektiv wie im Falle der Lateralkameras aufweisen. Es ist ganz besonders bevorzugt, dass die lediglich eine Longitudinalkamera einen größeren Bildwinkel als die Lateralkameras aufweist. Die lediglich eine Longitudinalkamera weist bevorzugt in der Transversalebene einen Bildwinkel von wenigstens 40°, weiter bevorzugt von wenigstens 50°, noch weiter bevorzugt wenigstens 60° und besonders bevorzugt von wenigstens 70° auf. Der Bildwinkel der Longitudinalkamera in der Transversalebene beträgt vorteilhafterweise höchstens 180° bzw. 160° bzw. 140° bzw. 130°.

Es liegt insbesondere im Rahmen der Erfindung, dass die Digitalkameras bzw. die Platinen bzw. die Bildsensoren relativ zum Gehäuse unbeweglich angeordnet sind. Der Begriff "unbeweglich" meint insbesondere das Fehlen eines Antriebes zwecks Ansteuerung einer translatorischen oder rotatorischen Bewegung einer oder mehrerer der Digitalkameras. Der Begriff "unbeweglich" meint insbesondere nicht eine ausschließlich irreversible Befestigung; beispielsweise sind von dem Begriff "unbeweglich" auch Schraubverbindungen umfasst. Es ist bevorzugt, dass der Halter bzw. die Halter relativ zum Gehäuse unbeweglich bzw. starr angeordnet ist/sind. Vorteilhafterweise sind die Digitalkameras bzw. die Platinen bzw. die Bildsensoren relativ zu dem Halter bzw. zu den Haltern unbeweglich bzw. starr angeordnet. Es ist möglich, dass die Digitalkameras bzw. die Platinen bzw. die Bildsensoren relativ zum Gehäuse unbeweglich angeordnet sind, wobei aber die Objektive, beispielsweise über einen Servomotor, entlang ihrer optischen Achse verfahrbar sein können.

Es ist bevorzugt, dass die Panoramakamera lediglich einen Halter für die Halterung der Digitalkameras aufweist. Vorzugsweise sind alle Digitalkameras der Panoramakamera auf dem Halter angeordnet. Der Halter kann einstückig und insbesondere homogen - beispielsweise mittels Spritzguss oder dreidimensionalen Druckes - ausgebildet sein. Es ist möglich, dass der Halter einen Kunststoff aufweist. Es ist möglich, dass der Halter ein Metall, beispielsweise Aluminium oder Stahl, umfasst. Der Halter kann mehrstückig ausgebildet sein und beispielsweise mehrere, miteinander verbundene Blechelemente aufweisen. Es ist möglich, dass der Halter in einem Querschnitt U-förmig ausgebildet ist. Vorzugsweise umfasst der U-förmige Halter zwei Schenkel sowie einen Mittelabschnitt zwischen den beiden Schenkeln. Gemäß einer bevorzugten Ausführungsform umfasst der Halter einen Mittelsteg zur Anordnung der wenigstens einen Longitudinalkamera, wobei vorteilhafterweise der Mittelsteg in der Draufsicht zwischen den Schenkeln angeordnet ist.

Vorzugsweise weist der wenigstens eine Platz mehrere Ausrichtungselemente zur Ausrichtung einer Digitalkamera auf. Es ist bevorzugt, dass jeder Platz wenigstens drei und vorzugsweise wenigstens vier Ausrichtungselemente aufweist. Bevorzugt definiert das Ausrichtungselement bzw. definieren die Ausrichtungselemente die Ausrichtung der Digitalkamera bzw. der Platine der Digitalkamera bzw. einer optischen Achse der Digitalkamera. Die Ausrichtungselemente sind gemäß einer bevorzugten Ausführungsform als Schraubverbindungen ausgebildet. Die Ausrichtungselemente umfassen vorteilhafterweise jeweils einen sockelförmigen Abschnitt. In einer besonders speziellen Ausführungsform weist jedes Ausrichtungselement einen Sockel mit einer Bohrung zwecks Verschraubung der Digitalkamera bzw. der Platine der Digitalkamera auf. Es ist möglich, dass lediglich ein Ausrichtungselement je Platz vorgesehen ist, wobei das lediglich eine Ausrichtungselement in Form einer Anlagefläche für, beispielsweise, ein Verkleben der Digitalkamera an dem Platz vorgesehen ist.

Vorteilhafterweise weist der Halter mehrere Plätze auf, wobei besonders vorteilhafterweise die Zahl der Plätze der Mehrzahl an Digitalkameras entspricht. Es ist besonders bevorzugt, wenn einige der mehreren Plätze zu einer Platzreihe an seitwärts nebeneinander angeordneten Plätzen gruppiert ist. Es ist besonders bevorzugt, wenn die Platzreihe in einem Querschnitt, insbesondere in einem Querschnitt in einer Transversal- bzw. Horizontalebene, eine gebogene Form, beispielsweise eine C- oder U-Form, bildet. Es ist möglich, dass die Plätze nicht direkt miteinander verbunden sind. Die gebogene Form der Platzreihe kann in dem Querschnitt auch gestrichelt ausgebildet sein. Vorzugsweise ist die Platzreihe den Lateralkameras zugeordnet. Vorteilhafterweise ist wenigstens ein Abschnitt der Platzreihe entlang des Mittelabschnittes des im Querschnitt U-förmigen Halters angeordnet. Es ist bevorzugt, dass die Plätze eine ebene Fläche aufweisen, wobei die ebene Fläche vorzugsweise einer Fläche einer Platine einer Digitalkamera entspricht. Es ist bevorzugt, dass die Plätze der Platzreihe bzw. die ebenen Flächen der Plätze der Platzreihe zueinander abgewinkelt sind, wodurch vorzugsweise eine gebogene Form, etwa eine C- oder U-Form, im Querschnitt in einer Transversalebene gebildet wird. Die Abwinkelung entspricht vorzugsweise den Bildwinkeln der Lateralkameras in einer Transversalebene. Ganz besonders bevorzugt umfasst der wenigstens eine Halter wenigstens einen weiteren Platz, wobei der weitere Platz in der Sagittalebene bezüglich eines Platzes der Platzreihe abgewinkelt ist. Vorzugsweise ist der wenigstens eine weitere Platz der wenigstens einen Longitudinalkamera zugeordnet.

Es ist bevorzugt, dass die Mehrzahl an Digitalkameras ausgebildet ist, eine Mehrzahl an Einzelbildern der Recheneinheit zu übergeben, wobei die Datenmenge der Mehrzahl an Einzelbildern in Summe höchstens 48 Megapixel, vorzugsweise höchstens 36 Megapixel, weiter vorzugsweise höchstens 24 Megapixel und besonders vorzugsweise höchstens 18 Megapixel beträgt. Zweckmäßigerweise entspricht die Datenmenge der Mehrzahl an Einzelbildern in Summe wenigstens 4 Megapixel, vorzugsweise wenigstens 6 Megapixel und besonders vorzugsweise wenigstens 8 Megapixel. Es ist besonders bevorzugt, dass die Recheneinheit ausgebildet ist, die von den Digitalkameras erhaltene Mehrzahl an Einzelbildern zu bearbeiten. Die Recheneinheit ist vorzugsweise mittels Kabeln und weiter vorzugsweise mittels Flachbandkabeln oder mit Koaxialkabeln mit den Digitalkameras verbunden. Beispielsweise sind die Kabel bzw. Flachbandkabel als *flexible-printed-circuit* (fpc) Verbindungen ausgebildet. Die Kabel übertragen zweckmäßigerweise Daten und/oder dienen der Spannungsversorgung.

Es ist vorteilhaft, dass die Mehrzahl an Digitalkameras in Summe eine physikalische Pixelzahl aufweist, welche höchstens 196 Megapixel, vorzugsweise höchstens 144 Megapixel und besonders vorzugsweise höchstens 96 Megapixel und ganz besonders vorzugsweise höchstens 72 Megapixel beträgt. Die physikalische Pixelzahl der Mehrzahl an Digitalkameras beträgt zweckmäßigerweise wenigstens 16 Megapixel, vorzugsweise wenigstens 24 Megapixel und besonders vorzugsweise wenigstens 32 Megapixel. Es ist sehr bevorzugt, dass die physikalische Pixelzahl wenigstens einer der Digitalkameras größer ist als die Pixelzahl der an die Recheneinheit übergebenen Einzelbilder der wenigstens einen Digitalkamera. Dies wird vorzugsweise mittels Unterabtastung erreicht, wozu die Digitalkameras vorzugsweise ausgebildet sind. Das Verhältnis von physikalischer Pixelzahl zur übergebenen Pixelzahl beträgt zweckmäßigerweise wenigstens 1,5, bevorzugt wenigstens 2, vorzugsweise wenigstens 2,5 und besonders vorzugsweise wenigstens 3.

Es ist möglich, dass die Recheneinheit einen Grafikprozessor aufweist. Gemäß einer alternativen Ausführungsform weist die Recheneinheit eine Mehrzahl an *Field Programmable Gate Array* (FPGAs) auf. Die Recheneinheit bzw. die Recheneinheiten sind vorteilhafterweise ausgebildet, die einzelnen Bildfolgen der Digitalkameras in Echtzeit zu verarbeiten. Der Begriff "Echtzeit" meint insbesondere eine garantierte Reaktionszeit, wobei die garantierte Reaktionszeit bevorzugt garantiert niemals überschritten wird. Vorzugsweise beträgt eine Bildwiederholfrequenz der von einer der Digitalkameras übergebenen Bilder an die Recheneinheit wenigstens 20 Hz, vorzugsweise wenigstens 22 Hz und besonders vorzugsweise wenigstens 24 Hz. Es ist zweckmäßig, dass die Bildwiederholfrequenz höchstens 1200 Hz, vorteilhafterweise höchstens 400 Hz, weiter vorteilhafterweise höchstens 100 Hz und besonders vorteilhafterweise höchstens 50 Hz beträgt. Eine Bit-Tiefe eines Bildpixels beträgt vorteilhafterweise höchstens 14 Bit, weiter vorteilhafterweise höchstens 12 Bit und besonders vorteilhafterweise höchstens 10 Bit. Es ist bevorzugt, dass die Bit-Tiefe eines Bildpixels wenigstens 6 Bit und ganz besonders bevorzugt genau 8 Bit beträgt.

Ganz vorteilhafterweise weist das Gehäuse wenigstens eine Fensteröffnung auf, wobei die Fensteröffnung mit einer transparenten Fensterabdeckung verschlossen ist. Zweckmäßigerweise umfasst das Gehäuse lediglich eine Fensteröffnung sowie bevorzugt lediglich eine Fensterabdeckung. Es ist vorteilhaft, dass die Fensterabdeckung einen Kunststoff umfasst, wobei der Kunststoff vorzugsweise ein Polykarbonat ist. Es ist möglich, dass die Fensterabdeckung gebogen ausgebildet ist. Besonders vorzugsweise ist die Fensterabdeckung als Teilkugelschale, beispielsweise als Halb- oder Viertelkugelschale, ausgebildet. Bevorzugt weist die Panoramakamera einen Schirm oberhalb der Digitalkameras auf. Vorteilhafterweise ist der Schirm Bestandteil des Gehäuses und ganz besonders vorzugsweise wird der Schirm von einem Hauptkörper des Gehäuses umschlossen.

Gemäß der Erfindung das Anordnungsmittel ausgebildet, die Panoramakamera an einem Masten -zu befestigen. Zweckmäßigerweise umschließt das Gehäuse wenigstens die Recheneinheit und die Digitalkameras und bevorzugt sämtliche elektrischen Komponenten. Das Anordnungsmittel ist an einer Außenseite des Gehäuses angeordnet. Das

Anordnungsmittel springt bezüglich der Außenseite des Gehäuses bzw. der Außenseite eines Hauptkörpers des Gehäuses vor. Das Anordnungsmittel umfasst wenigstens ein Stützelement, mit dessen Hilfe die Panoramakamera anhand einer Längsrichtung des Mastes ausrichtbar ist. Ganz besonders bevorzugt ist es, dass das Anordnungsmittel an einer Seite der Panoramakamera angeordnet ist. Vorzugsweise weist das Anordnungsmittel wenigstens ein Stützelement und vorzugsweise zwei Stützelemente auf, welches bzw. welche über jeweils wenigstens zwei Abstützpunkte jeweils eine Linie zur Anlage an dem immobilen Bau definiert bzw. definieren. Ganz besonders vorzugsweise umfasst das Stützelement wenigstens eine Leiste und besonders vorzugsweise zwei zueinander parallele Leisten, so dass eine parallele Anlage an dem Masten sichergestellt ist.

Vorteilhafterweise umfasst die Panoramakamera wenigstens ein Mikrofon, welches zweckmäßigerweise an einer Innenseite des Gehäuses bzw. des Hauptkörpers des Gehäuses der Panoramakamera angeordnet ist. Es ist besonders bevorzugt, dass die Panoramakamera eine Schnittstelle zur Weitergabe von Daten, insbesondere von Einzelbildern bzw. Bilderfolgen, aufweist. Die Schnittstelle ist bevorzugt als Funkantenne ausgebildet und umfasst vorzugsweise einen L*ong-Term-Evolution* (*LTE*)-Adapter. Der LTE-Adapter ist vorzugsweise 4G-fähig (fourth generation).

Vorteilhafterweise umfasst das Gehäuse bzw. der Hauptkörper des Gehäuses eine innere Gehäusewand und eine äußere Gehäusewand. Die innere Gehäusewand umfasst bevorzugt Metall. Die äußere Gehäusewand weist vorzugsweise Kunststoff auf. Die innere Gehäusewand und die äußere Gehäusewand sind besonders bevorzugt durch einen Luftspalt voneinander getrennt, wobei der Luftspalt bevorzugt dazu ausgebildet ist, einen Luftaustausch zu ermöglichen. Zweckmäßigerweise umfasst die Panoramakamera eine Wärmebrücke, wobei die Wärmebrücke vorteilhafterweise mit dem Gehäuse bzw. mit dem Hauptkörper des Gehäuses bzw. mit der inneren Gehäusewand und der wenigstens einen Recheneinheit verbunden ist und weiter vorzugsweise innerhalb des Gehäuses angeordnet ist.

Zur Lösung der technischen Aufgabe lehrt die Erfindung außerdem ein Verfahren zum Betrieb einer Panoramakamera, umfassend wenigstens eine Panoramakamera, insbesondere eine erfindungsgemäße Panoramakamera, wobei die Panoramakamera ein Gehäuse, wenigstens eine Recheneinheit und eine Mehrzahl an Digitalkameras umfasst, wobei das Gehäuse die Recheneinheit und die Digitalkameras umschließt, wobei jede Digitalkamera eine Bildfolge aus einer Vielzahl an Einzelbildern erzeugt, wobei die wenigstens eine Recheneinheit die Bildfolgen der Digitalkameras parallel bearbeitet, wobei die wenigstens eine Recheneinheit die bearbeiteten Bildfolgen an eine Schnittstelle der Panoramakamera für die Weiterleitung der Bildfolgen an einen Rechner außerhalb des Gehäuses übergibt.

Die Bearbeitung der Vielzahl an Einzelbildern durch die Recheneinheit umfasst insbesondere eine Farbkorrektur und/oder eine Linsenkorrektur und/oder eine Beleuchtungssteuerung und/oder ein Nachschärfen. Es ist möglich, dass die Bearbeitung nicht das Zusammensetzen der Einzelbilder zu einem Panoramabild (*stitching*) umfasst. Das Zusammensetzen der Einzelbilder zu einem Panoramabild kann auf dem Rechner außerhalb des Gehäuses erfolgen.

Nachfolgend wird die Erfindung anhand einer ein Ausführungsbeispiel darstellenden Zeichnung näher erläutert. Es zeigen in schematischer Darstellung:
- Fig. 1: die Position einer erfindungsgemäßen Panoramakamera relativ zu einem Spielfeld in der Draufsicht,
- Fig. 2: die Position der Panoramakamera aus Fig. 1 in einer Seitenansicht,
- Fig. 3: eine vergrößerte perspektivische Darstellung der Panoramakamera aus den Fig. 1 und 2,
- Fig. 4: einen Halter für die Anordnung von Digitalkameras in einer Vorderansicht aus der Panoramakamera der vorangehenden Figuren,
- Fig. 5: den Halter aus Fig. 4 in einer Draufsicht und
- Fig. 6: den Halter aus den Figuren 4 und 5 in einer Seitenansicht.

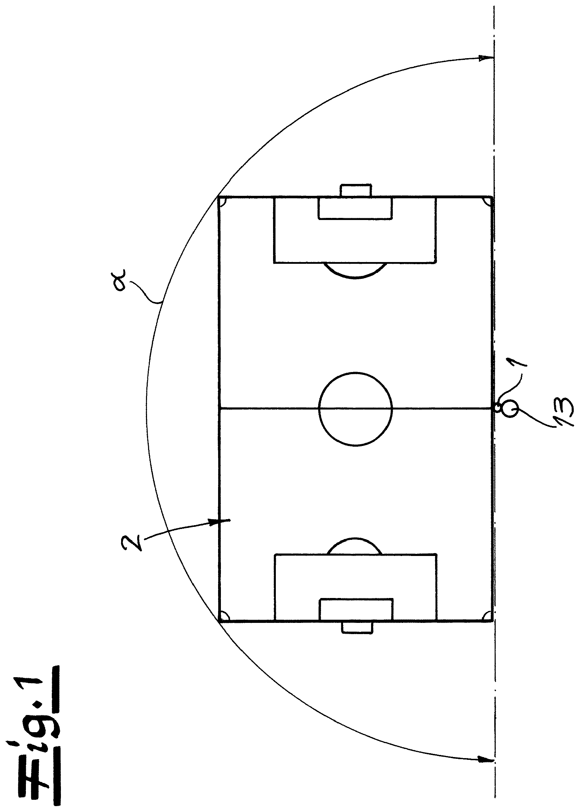

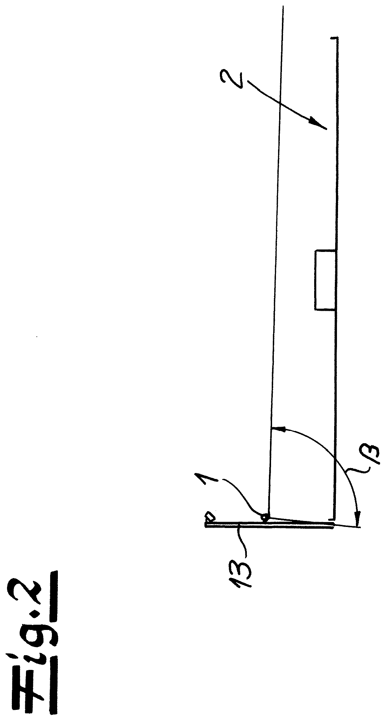

In den Figuren 1 und 2 ist die relative Position einer erfindungsgemäßen Panoramakamera 1 relativ zu einem Spielfeld 2 in Form eines Fußballplatzes abgebildet. Die Panoramakamera 1 ist an einem immobilen Bau 13 in Form eines Flutlichtmastes auf etwa 9 m Höhe angeordnet. Der immobile Bau 13 in Form des Flutlichtmastes befindet sich an der Seitenlinie etwa in Höhe der Mittellinie.

Die Panoramakamera 1 weist ein Bildfeld bzw. Blickfeld in Richtung des Spielfeldes 2 auf. Die Panoramakamera 1 besitzt in einer Transversalebene einen transversalen Panoramabildwinkel α (s. Fig. 1), wohingegen die Panoramakamera 1 einen sagittalen Panoramabildwinkel β in einer Sagittalebene aufspannt. In dem in den Figuren 1 und 2 gezeigten montierten Zustand der Panoramakamera 1 ist die der Panoramakamera 1 zugeordnete Transversalebene identisch mit einer Horizontalebene. Demgegenüber ist die Sagittalebene senkrecht zur Transversalebene ausgebildet und wird in dem Ausführungsbeispiel der Figuren 1 und 2 durch die Mittellinie des Spielfeldes 2 definiert. In diesem Ausführungsbeispiel beträgt der transversale Panoramabildwinkel α 180°, wohingegen der sagittale Panoramabildwinkel β in diesem Ausführungsbeispiel 95° beträgt. Das Bildfeld dieses Ausführungsbeispiels entspricht daher etwa ein Kugelviertel.

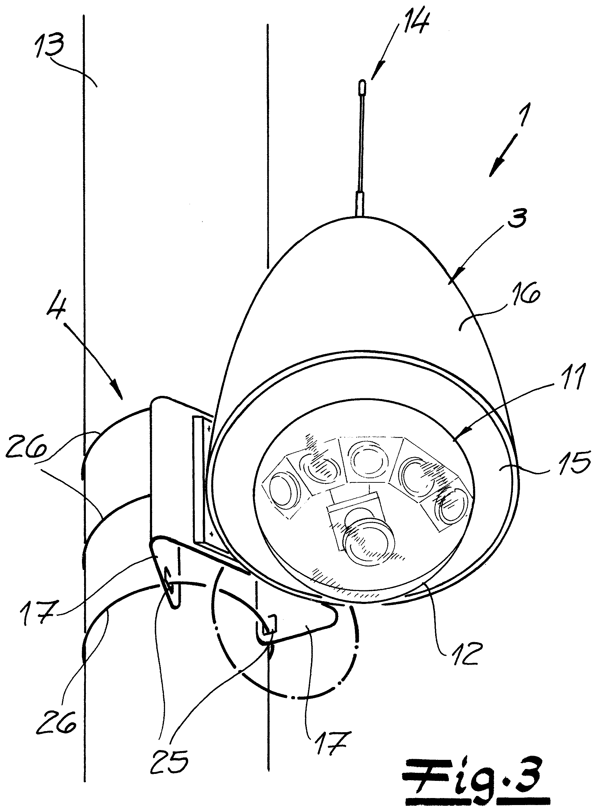

In Fig. 3 ist die Panoramakamera 1 aus einer Froschperspektive vergrößert abgebildet. Die Panoramakamera 1 umfasst ein Gehäuse 3, eine Schnittstelle 14 zur Übermittlung von Daten in Form einer LTE-Antenne sowie ein Anordnungsmittel 4 zur Anordnung der Panoramakamera 1 an dem immobilen Bau 13. Das Gehäuse 3 weist einen Hauptkörper 16 auf, welcher etwa glockenförmig ausgebildet ist und an seinem unteren Ende einen Schirm 15 umschließt. Der Schirm 15 seinerseits ist etwa ringförmig ausgestaltet und bildet mit seinem Ringloch eine Fensteröffnung 11. Die Fensteröffnung 11 wird durch eine etwa halbkugelschalenförmige Fensterabdeckung 12 nach unten hin geschlossen. In diesem Ausführungsbeispiel ist die Fensterabdeckung 12 aus Polykarbonat.

Das Anordnungsmittel 4 umfasst in diesem Ausführungsbeispiel zwei Stützelemente 17 in Form von zwei zueinander parallelen Blechkanten. Die beiden parallelen Blechkanten führen dazu, dass die Panoramakamera 1 automatisch parallel zur Längsachse des Flutlichtmastes ausgerichtet wird. Über Ausnehmungen 25 in den Stützelementen 17 werden Spannmittel 26, beispielsweise in Form von Seilen oder Bändern, zwecks Befestigung der Panoramakamera 1 an dem Flutlichtmasten 13 hindurchgeführt. Das gestrichelt dargestellte Element in Fig. 3 stellt ein Kabel für die Spannungsversorgung dar und ist als eine bloße Ausführungsoption zu verstehen.

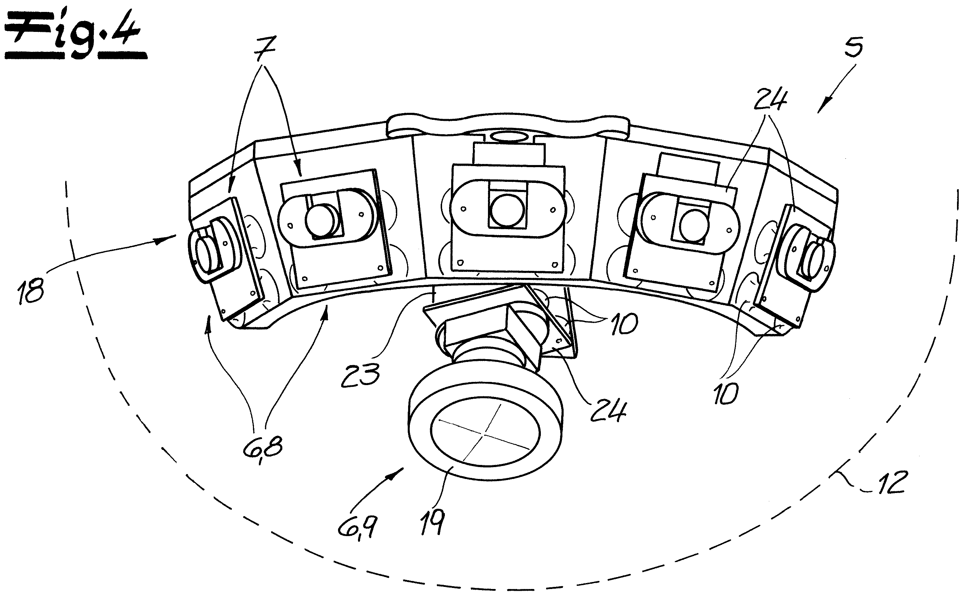

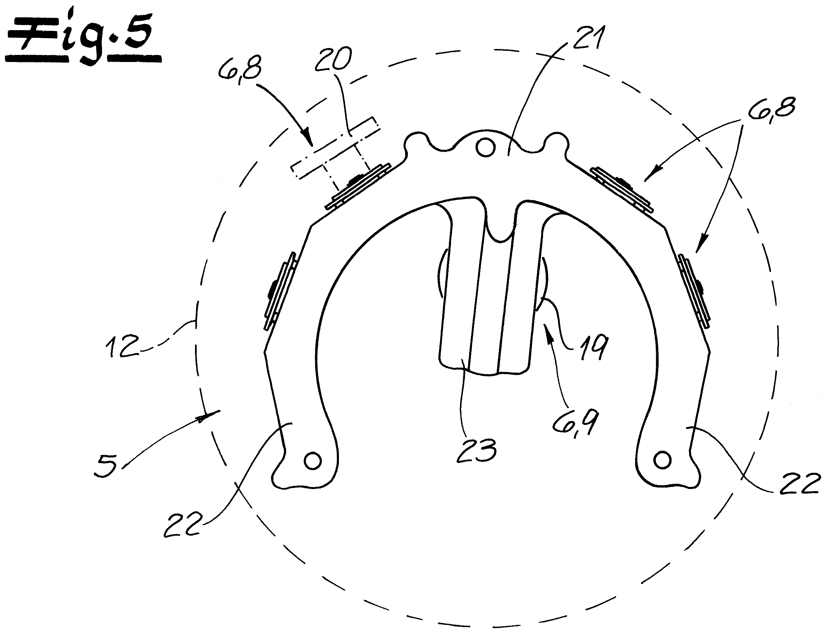

In Fig. 4 ist die Fensterabdeckung 12 mittels gestrichelter Linie angedeutet. Die Fensterabdeckung 12 deckt vor allem einen Halter 5 zur Halterung einer Mehrzahl an Digitalkameras 6 ab. Der Halter 5 dieses Ausführungsbeispiels wurde mittels dreidimensionalen Druckes erzeugt und besteht aus Kunststoff. Die Digitalkameras 6 weisen jeweils eine Platine 24, einen hier in den Figuren nicht erkennbaren CMOS-Bildsensor sowie ein Objektiv 19, 20 auf (s. Figuren 4 und 5). Die Digitalkameras 6 sind jeweils mittels vier Ausrichtungselementen 10 auf den Plätzen 7 befestigt und dadurch auch in jeweils bestimmte Richtungen ausgerichtet. Die Ausrichtungselemente 10 sind in diesem Ausführungsbeispiel als Sockel mit jeweils einer Bohrung ausgebildet. Die Bohrungen der Sockel sind entsprechenden Bohrungen der Platinen 24 zugeordnet, so dass die Digitalkameras 6 auf diese Weise mit dem Halter 5 verschraubt werden können.

Die in Fig. 4 gewählte Vorderansicht des Halters 5 erlaubt einen guten Blick auf eine Mehrzahl an Plätzen 7 zur Anordnung von Digitalkameras 6. In diesem Ausführungsbeispiel sind fünf Plätze 7 bzw. Digitalkameras 6, 8 seitwärts nebeneinander angeordnet und bilden eine Platzreihe 18. Die Digitalkameras 6, 8 der Platzreihe 18 weisen nicht nur den gleichen Bildsensor, sondern darüber hinaus das gleiche Objektiv 20 auf (s. Fig. 5). Das Objektiv 20 dieses Ausführungsbeispiels weist eine Brennweite vorzugsweise zwischen 4 und 5 mm auf. Die Bildfelder der Digitalkameras 6, 8 der Platzreihe 18 überlappen sich in ihren jeweiligen Seitenbereichen und spannen so den transversalen Panoramabildwinkel α auf. Aufgrund der seitlichen Orientierung der Digitalkameras 6, 8 der Platzreihe 18 werden diese Digitalkameras 6 auch Lateralkameras 8 genannt.

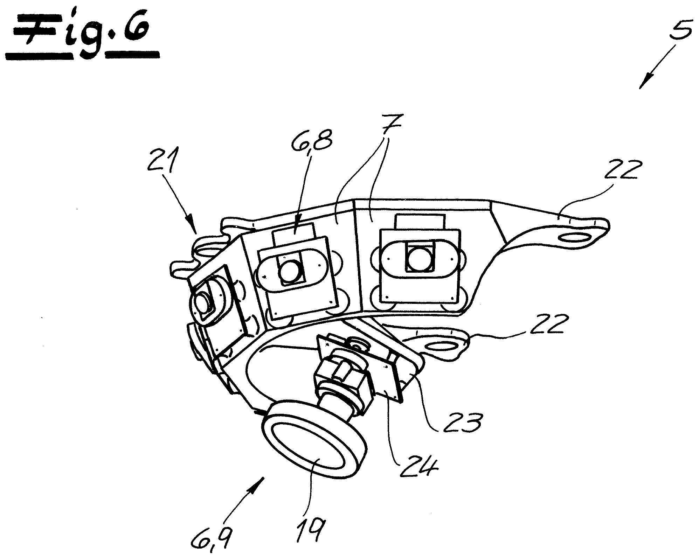

In Fig. 5 ist der Halter 5 in einer Draufsicht abgebildet, wodurch sichtbar wird, dass der Halter 5 etwa U-förmig ausgebildet ist und einen Mittelabschnitt 21 sowie zwei Schenkel 22 aufweist. Entlang der beiden Schenkel 22 und des Mittelabschnittes 21 ist die Platzreihe 18 mit den Lateralkameras 8 angeordnet. Zwischen den beiden Schenkeln 22 befindet sich außerdem noch ein Mittelsteg 23 (vgl. Fig. 4 bis 6), an welchem eine weitere Digitalkamera 6, 9 angeordnet ist und welche deutlich weiter nach unten ausgerichtet ist im Vergleich zu den Lateralkameras 8. Die weiter nach unten ausgerichtete Digitalkamera 6, 9 wird im Folgenden auch Longitudinalkamera 9 genannt. Im Gegensatz zu den verzerrungsfreien Objektiven 20 der Lateralkameras 8 ist die Longitudinalkamera 9 mit einem Objektiv in Form eines Fischaugenobjektives ausgestattet. Hieraus resultiert ein Bildwinkel von 115° in der Transversalebene und von 86° in der Sagittalebene. Demgegenüber weisen die Lateralkameras 8 mit den Objektiven 20 einen Bildwinkel von 47° in der Transversalebene und von 36° in der Sagittalebene auf. Das Bildfeld der Longitudinalkamera 9 ist so ausgerichtet, dass es sich an seinem oberen Rand mit den Bildfeldern aller Lateralkameras 8 überlappt.

Die Digitalkameras 6 dieses Ausführungsbeispiels sind mittels nicht dargestellten Flachbandkabeln in Form von *flexible-printed-circuit* (FPC)-Verbindern mit einer ebenfalls nicht dargestellten Recheneinheit verbunden. Die Flachbandkabel ermöglichen sowohl einen Datentransport als auch die Spannungsversorgung der Digitalkameras 6. Die Bildsensoren der Digitalkameras 6 weisen eine physikalische Bildgröße von 8 Megapixeln auf. Mittels Unterabtastung auf den Platinen 24 der Digitalkameras 6 wird die Bildgröße jeweils von 8 Megapixeln auf 2 Megapixel verringert und dann über die Flachbandkabel an die Recheneinheit mit einer Bildwiederholfrequenz von 25 Hz übertragen. Die Recheneinheit ist daher dazu ausgebildet, 12 Megapixel bei 25 Hz zu verarbeiten. Die Bittiefe eines Pixels beträgt in diesem Ausführungsbeispiel 8 Bit.

Im vorliegenden Ausführungsbeispiel ist die Recheneinheit echtzeitfähig. Die Recheneinheit bearbeitet alle sechs Bilder bzw. Bildfolgen parallel und führt jeweils eine Farbkorrektur, eine Linsenkorrektur, eine Beleuchtungssteuerung sowie ein Nachschärfen durch. Nach diesen Bearbeitungsschritten werden die sechs bearbeiteten Bilder bzw. Bildfolgen der Digitalkameras 6 an die Schnittstelle 14 in Form einer LTE-Antenne weitergeleitet. Mittels der Schnittstelle werden die sechs parallelen Bilder bzw. Bildfolgen an einen entfernt gelegenen Rechner bzw. Hauptrechner übertragen, welcher die sechs parallelen Bildfolgen bzw. Videos zusammensetzt. Von dort kann das auf diese Weise erstellte Panoramavideo beispielsweise an einen Rechner des Sportvereins des Spielfeldes 2 übertragen werden, wo das Video noch weiter bearbeitet werden kann. In Betracht kommt dort insbesondere ein Schneiden des Panoramavideos.

## Patentansprüche

1. Verwendung einer Panoramakamera (1) zur Videoaufnahme von Spielfeldern (2), insbesondere von Fußballplätzen, umfassend ein Gehäuse (3), ein Anordnungsmittel (4) zur Anordnung der Panoramakamera (1) in einer bestimmten Höhe, wenigstens eine Recheneinheit, wenigstens einen Halter (5) für die Halterung einer oder mehrerer Digitalkameras sowie eine Mehrzahl an Digitalkameras (6), wobei der wenigstens eine Halter (5) wenigstens einen Platz (7) zur Anordnung einer der Digitalkameras (6) auf dem Platz (7) aufweist, wobei die Digitalkameras (6) so ausgerichtet sind, dass ihre jeweiligen Bildfelder teilweise einander überlappen, so dass den Bildfeldern zugehörige Einzelbilder zu einem Panoramabild zusammensetzbar sind, wobei die Digitalkameras (6) so ausgerichtet sind, dass in einer Transversalebene ein transversaler Panoramabildwinkel α von wenigstens 120° entsteht, wobei die Digitalkameras (6) in einer Sagittalebene einen sagittalen Panoramabildwinkel β von wenigstens 60° aufspannen,
**dadurch gekennzeichnet, dass**
das Gehäuse (3) die Recheneinheit und die Mehrzahl an Digitalkameras (6) umschließt, wobei das Anordnungsmittel (4) an einer Außenseite des Gehäuses (3) angeordnet ist, wobei das Anordnungsmittel (4) gegenüber der Außenseite des Gehäuses (3) vorspringt, wobei das Anordnungsmittel (4) ausgebildet ist, die Panoramakamera (1) an einem Masten zu befestigen, wobei das Anordnungsmittel (4) wenigstens ein Stützelement (17) umfasst, mit dessen Hilfe die Panoramakamera (1) anhand einer Längsrichtung des Mastes ausrichtbar ist.

2. Verwendung der Panoramakamera (1) nach Anspruch 1, wobei die Mehrzahl an Digitalkameras (6) wenigstens drei Lateralkameras (8) umfasst, wobei die Lateralkameras (8) in einem montierten Zustand so ausgerichtet sind, dass ihre entsprechenden Bildfelder seitwärts nacheinander folgen.

3. Verwendung der Panoramakamera (1) nach Anspruch 1 oder 2, wobei die Mehrzahl an Digitalkameras (6) wenigstens eine Longitudinalkamera (9) umfasst, wobei die Longitudinalkamera (9) vorzugsweise so ausgerichtet ist, dass ihr entsprechendes Bildfeld in einem montierten Zustand der Panoramakamera (1) im Vergleich zu den Bildfeldern der übrigen der Mehrzahl an Digitalkameras (6) am weitesten nach unten gerichtet ist.

4. Verwendung der Panaromakamera (1) nach einem der Ansprüche 1 bis 3, wobei die Digitalkameras (6) relativ zum Gehäuse (3) unbeweglich angeordnet sind.

5. Verwendung der Panoramakamera (1) nach einem der Ansprüche 1 bis 4, wobei die Panoramakamera (1) lediglich einen Halter (5) für die Halterung der Digitalkameras (6) aufweist.

6. Verwendung der Panaromakamera (1) nach einem der Ansprüche 1 bis 5, wobei der wenigstens eine Platz (7) mehrere Ausrichtungselemente (10) zur Ausrichtung einer Digitalkamera (6) aufweist.

7. Verwendung der Panoramakamera (1) nach einem der Ansprüche 1 bis 6, wobei die Mehrzahl an Digitalkameras (6) ausgebildet ist, parallel eine Mehrzahl an Einzelbildern der Recheneinheit zu übergeben, wobei die Datenmenge der Mehrzahl an Einzelbildern in Summe höchstens 48 Megapixel beträgt.

8. Verwendung der Panoramakamera (1) nach einem der Ansprüche 1 bis 7, wobei das Gehäuse (3) wenigstens eine Fensteröffnung (11) aufweist, wobei die Fensteröffnung (11) mit einer transparenten Fensterabdeckung (12) verschlossen ist.

9. Verfahren zur Videoaufnahme von Spielfeldern (2), insbesondere von Fußballplätzen, mit wenigstens einer Panoramakamera (1) nach einem der Ansprüche 1 bis 7.

## Claims

1. Use of a panoramic camera (1) for the video recording of playing fields (2), in particular football pitches, comprising a housing (3), an arrangement means (4) for arranging the panoramic camera (1) at a certain height, at least one computing unit, at least one mounting support (5) for mounting one or more digital cameras, and a plurality of digital cameras (6), wherein the at least one mounting support (5) has at least one seat (7) for arranging one of the digital cameras (6) on the seat (7), wherein the digital cameras (6) are oriented so that their respective image fields partially overlap one another, so that individual images associated with the image fields can be combined to form a panoramic image, wherein the digital cameras (6) are oriented so that a transverse panoramic image angle α of at least 120° results in a transverse plane, wherein the digital cameras (6) cover a sagittal panoramic image angle β of at least 60° in a sagittal plane,
**characterized in that**
the housing (3) encloses the computing unit and the plurality of digital cameras (6), wherein the arrangement means (4) is arranged on an outer side of the housing (3), wherein the arrangement means (4) projects from the outer side of the housing (3), wherein the arrangement means (4) is designed to fasten the panoramic camera (1) to a pole, wherein the arrangement means (4) comprises at least one support element (17) by means of which the panoramic camera (1) can be oriented according to a longitudinal direction of the pole.

2. The use of the panoramic camera (1) according to claim 1, wherein the plurality of digital cameras (6) comprises at least three lateral cameras (8), wherein the lateral cameras (8) are oriented in a mounted state so that their corresponding image fields follow one another laterally.

3. The use of the panoramic camera (1) according to claim 1 or 2, wherein the plurality of digital cameras (6) comprises at least one longitudinal camera (9), wherein the longitudinal camera (9) is preferably oriented so that its corresponding image field in a mounted state of the panoramic camera (1) is directed the furthest downwards compared to the image fields of the remainder of the plurality of digital cameras (6).

4. The use of the panoramic camera (1) according to one of claims 1 to 3, wherein the digital cameras (6) are arranged so as to be immobile relative to the housing (3) .

5. The use of the panoramic camera (1) according to one of claims 1 to 4, wherein the panoramic camera (1) merely comprises one mounting support (5) for mounting the digital cameras (6).

6. The use of the panoramic camera (1) according to one of claims 1 to 5, wherein the at least one seat (7) comprises a plurality of orientation elements (10) for orienting a digital camera (6).

7. The use of the panoramic camera (1) according to one of claims 1 to 6, wherein the plurality of digital cameras (6) is designed to transfer a plurality of individual images to the computing unit in parallel, wherein the data volume of the plurality of individual images in total amounts to at most 48 megapixels.

8. The use of the panoramic camera (1) according to one of claims 1 to 7, wherein the housing (3) has at least one window opening (11), wherein the window opening (11) is closed with a transparent window cover (12).

9. Method for the video recording of playing fields (2), in particular football pitches, with at least one panoramic camera (1) according to one of claims 1 to 7.

## Revendications

1. Utilisation d'une caméra panoramique (1) pour l'enregistrement vidéo de terrains de jeux (2), en particulier terrains de football, comprenant un boîtier (3), un moyen d'agencement (4) pour agencer la caméra panoramique (1) à une hauteur déterminée, au moins une unité de calcul, au moins un support (5) pour contenir un ou plusieurs appareils photo numériques et une pluralité d'appareils photo numériques (6), le au moins un support (5) ayant au moins un emplacement (7) pour disposer un des appareils photo numériques (6) sur l'emplacement (7), dans laquelle les caméras numériques (6) sont alignées de manière à ce que leurs champs d'image se superposent partiellement, de sorte que les images individuelles appartenant aux champs d'image puissent être combinées pour former une image panoramique, dans laquelle les caméras numériques (6) sont alignées de telle sorte qu'un angle d'image panoramique transversal α d'au moins 120° soit créé dans un plan transversal, dans laquelle les caméras numériques (6) dans un plan sagittal définissent un angle de vue panoramique sagittal β d'au moins 60°,
**caractérisée en ce que**
le boîtier (3) englobe l'unité de traitement et la pluralité de caméras numériques (6), dans laquelle le moyen d'agencement (4) est agencés sur un extérieur du logement (3), dans laquelle le moyen d'agencement (4) dépasse en saillie par rapport à l'extérieur du logement (3), dans laquelle le moyen d'agencement (4) est configuré pour fixer la caméra panoramique sur un mât, dans laquelle le moyen d'agencement (4) comprend au moins un élément de support (17), à l'aide duquel la caméra panoramique (1) peut être alignée sur la base d'une direction longitudinale du mât.

2. Utilisation de la caméra panoramique (1) selon la revendication 1, dans laquelle la pluralité de caméras numériques (6) comprend au moins trois caméras latérales (8), dans laquelle les caméras latérales (8) sont alignées dans un état monté de sorte que leur les champs d'image correspondants se succèdent latéralement.

3. Utilisation de la caméra panoramique (1) selon la revendication 1 ou 2, dans laquelle la pluralité de caméras numériques (6) comprend au moins une caméra longitudinale (9), dans laquelle la caméra longitudinale (9) est de préférence alignée de telle manière que son champ d'image correspondant dans un état monté de la caméra panoramique (1) par rapport aux champs d'image du reste de la majorité des caméras numériques (6) soit dirigé le plus vers le bas.

4. Utilisation de la caméra panoramique (1) selon une des revendications 1 à 3, dans laquelle les caméras numériques (6) sont disposées de manière inamovible par rapport au boîtier (3).

5. Utilisation de la caméra panoramique (1) selon une quelconque des revendications 1 à 4, dans laquelle la caméra panoramique (1) ne comporte qu'un seul support (5) pour maintenir les caméras numériques (6).

6. Utilisation de la caméra panoramique (1) selon une quelconque des revendications 1 à 5, dans laquelle le au moins un emplacement (7) comporte une pluralité d'éléments d'alignement (10) pour aligner une caméra numérique (6).

7. Utilisation de la caméra panoramique (1) selon une des revendications 1 à 6, dans laquelle la pluralité de caméras numériques (6) est conçue pour transférer une pluralité d'images individuelles à l'unité de traitement en parallèle, le volume de données de la pluralité d'images individuelles totalisant au plus 48 mégapixels.

8. Utilisation de la caméra panoramique (1) selon une quelconque des revendications 1 à 7, dans laquelle le boîtier (3) présente au moins une ouverture de fenêtre (11), dans laquelle l'ouverture de fenêtre (11) est fermée par un couvercle de fenêtre transparent (12).

9. Procédé d'enregistrement vidéo de terrains de jeux (2), notamment de terrains de football, avec au moins une caméra panoramique (1) selon une des revendications 1 à 7.
